# FASCICULE DE BREVET EUROPEEN

(11) **EP 2 145 815 B1**
(45) Date de publication et mention de la délivrance du brevet: **10.04.2013**
(21) Numéro de dépôt: 09165570.4
(22) Date de dépôt: 15.07.2009
(51) Int. Cl.: B62D 33/06, B62D 33/00, B62D 25/08, B62D 65/02, B62D 29/04, B60R 3/00

(54) **Ensemble d'une aile et d'une pièce porteuse pour un véhicule automobile**
Einheit aus einem Kotflügel und einem tragenden Element für Kraftfahrzeug
Assembly of a wing and a supporting element for an automobile

(30) Priorité: 16.07.2008 FR 0854841
(43) Date de publication de la demande: 20.01.2010
(60) Demande divisionnaire: 12184355.1
(73) Titulaire: Compagnie Plastic Omnium, 69007 Lyon (FR)
(72) Inventeur: Savin, René, 42390, VILLARS (FR); Ben Salah, Karim, 07340, SAINT DESIRAT (FR)
(74) Mandataire: Remy, Vincent Noel Paul

(56) Documents cités:
- EP-A- 0 361 511
- WO-A-2009/004221
- US-A- 4 991 906
- US-B1- 6 264 222
- US-B1- 6 899 379

## Description

La présente invention concerne le domaine technique des véhicules automobiles et plus particulièrement celui des véhicules utilitaires à moteur du type comprenant un châssis et une cabine de conduite posée sur le châssis.

De tels véhicules peuvent être des tracteurs de remorques, que l'on désigne souvent par le terme anglais «trucks »: Leur châssis supporte notamment la chaîne de transmission équipée d'un groupe moto-propulseur et les éléments constitutifs du pare-chocs et, à l'avant, posée sur le châssis, une cabine de conduite sur laquelle sont fixés différents éléments de carrosserie tels que des ailes et une calandre.

US 6 264 222 décrit un ensemble d'une aile et d'une pièce porteuse dans lequel la pièce porteuse est conformée pour être fixée directement à la cabine, tout en portant l'aile, l'aile et la pièce porteuse se superposant au moins partiellement.

Par ailleurs, dans l'état de la technique, les ailes sont reliées à la cabine par des pattes métalliques fixées directement-à la cabine. Les ailes sont généralement réalisées dans un matériau thermodurcissable et forment des pièces structurelles du véhicule automobile ce qui nuit à l'aspect esthétique extérieur du véhicule.

En outre, au cours du fonctionnement du véhicule, le groupe moto-propulseur produit du bruit qui est transmis par l'aile à l'extérieur du véhicule ainsi que de la chaleur, qu'il transmet à toutes les pièces de carrosserie environnantes et, en particulier, aux ailes.

Il en résulte l'inconvénient que l'utilisateur du véhicule peut avoir une impression de mauvaise conception ou d'une piètre qualité de matériau.

En d'autres termes, la qualité perçue du véhicule peut être désavantageuse pour les différentes raisons mentionnées ci-dessus.

L'invention a notamment pour but d'améliorer l'aspect esthétique du véhicule automobile et d'obtenir une relativement bonne qualité perçue du véhicule, sans entraîner de surcoût ni augmenter le poids du véhicule.

A cet effet, l'invention a pour objet un ensemble d'une aile et d'une pièce porteuse de l'aile conforme à la revendication 1.

La doublure intérieure de l'aile permet notamment d'isoler thermiquement l'aile du groupe moto-propulseur, en formant un écran thermique entre le groupe moto-propulseur et l'aile. En outre, la doublure forme également un écran acoustique relativement efficace contre les bruits émis par le groupe moto-propulseur. Par ailleurs, du fait que la fonction de support de l'aile est assurée par la pièce porteuse, l'aspect esthétique de l'aile peut être optimisé tout en conservant des relativement bonnes propriétés de rigidité de l'ensemble.

Par ailleurs, la manutention de l'ensemble est facilitée du fait de la relativement bonne tenue entre elles de la pièce et de l'aile une fois assemblées. En effet, du fait que la pièce porteuse forme une doublure, elle supporte l'aile sur une surface relativement grande, ce qui permet une manipulation de l'ensemble sans déplacement de l'aile par rapport à la pièce porteuse. Avantageusement, l'ensemble peut être monté sur la cabine en une seule opération dans la chaîne d'assemblage du véhicule automobile; avant ou après le montage de la cabine sur le châssis.

De préférence, la pièce porteuse est réalisée dans un matériau composite par exemple du type thermodurcissable. Le matériau thermodurcissable est de préférence du type composite moulé en feuille (SMC : de l'anglais Sheet Moulding Compound), conférant de la rigidité à l'ensemble tout en ayant de bonnes propriétés de résistance à la chaleur et un poids réduit. L'utilisation du SMC pour la pièce porteuse permet d'utitiser un matériau plus souple que le SMC pour l'aile, tel qu'un matériau thermoplastique, par exemple en polypropylène. Un autre avantage du SMC est sa bonne stabilité dimensionnelle pour un moule donné : toutes les pièces porteuses issues du même moule présentent entre elles une très faible variabilité géométrique:
Un ensemble selon l'invention peut en outre comporter l'une ou plusieurs des caractéristiques selon lesquelles:
   - la pièce porteuse est réalisée dans un matériau thermodurcissable, par exemple du type composite moulé en feuille (SMC),
   - l'aile est réalisée dans un matériau thermoplastique, par exemple en polypropylène,
   - la pièce porteuse est fixée à la cabine de façon à être fixe relativement à cette-ci. On entend par là que la pièce porteuse ne présente aucun degré de liberté relativement à la cabine et est prévue pour rester, une fois montée sur la cabine, dans une même position relativement à celle-ci,
   - l'aile comprend un bord inférieur formant arche d'une roue de véhicule automobile, situé de préférence en partie arrière de
   - la pièce porteuse est munie d'une surface conformée pour épouser sensiblement au moins partiellement la forme d'une surface interne de l'aile,
   - la pièce porteuse comprend un bord supérieur sur lequel sont ménagés les moyens de fixation de la pièce porteuse à la cabine et une face latérale formant une face d'appui et de fixation de l'aile,
   - l'ensemble comprend en outre un coffre de rangement muni d'une ouverture d'accès à l'intérieur du coffre destinée à coïncider avec une ouverture ménagée dans l'aile, le coffre comprenant des, moyens de fixation à l'aile et à la cabine et portant l'aile,
   - le coffre est réalisé dans un matériau thermodurcissable, par exemple dans un matériau du type composite moulé en feuille (SMC).

L'invention a en outre pour objet un avant de véhicule automobile comprenant une cabine de conduite et un ensemble selon l'invention, la pièce porteuse de l'ensemble étant fixée directement à la cabine.

L'invention a enfin pour objet un véhicule automobile, qui comprend un avant de véhicule automobile selon l'invention.

L'invention sera mieux comprise à la lecture de la description qui va suivre, donnée uniquement à titre d'exemple et faite en se référant aux dessins dans lesquels :
- la figure 1 est une vue en perspective d'un véhicule automobile selon un premier mode de réalisation ;
- la figure 2 est une vue éclatée en perspective d'un ensemble comprenant une aile et une pièce porteuse selon le premier mode de réalisation de l'invention ;
- la figure 3 est une vue en perspective d'un ensemble selon un second mode de réalisation ;
- la figure 4 est une vue éclatée en perspective de l'ensemble de la figure 3 ;
- la figure 5 est une vue éclatée en perspective d'un ensemble selon un troisième mode de réalisation ;
- la figure 6 est une vue avant en perspective de l'ensemble représenté sur la figure 5 ;
- la figure 7 est une vue arrière en perspective d'un coffre de rangement de l'ensemble représenté sur les figures 5 et 6 ;
- la figure 8 est une vue agrandie des parties cerclées 8 de la figure 7 ;
- les figures 9A, 9B, 9C sont des vues partielles des parties cerclées respectivement 9A, 9B et 9C de la figure 3.

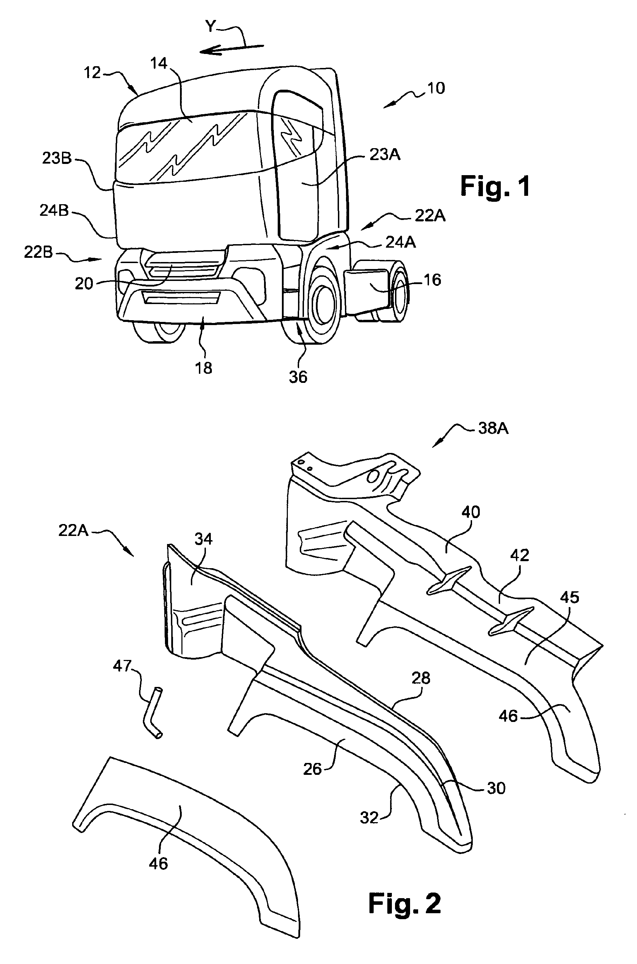

On a représenté sur la figure 1 un véhicule automobile selon un premier mode de réalisation. Ce véhicule est désigné par la référence générale 10. Dans cet exemple, le véhicule 10 est un tracteur de remorque désigné en anglais également par le terme "truck".

Ce tracteur de remorque 10 comprend un avant 12 comprenant une cabine de conduite 14 et un châssis 16 supportant notamment des éléments constitutifs du pare-chocs 18 et à l'avant duquel est posée la cabine de conduite 14. La cabine de conduite 14 est fixée sur le châssis 16 à l'aide de moyens de fixation (non représentés) tels que des vérins hydrauliques ou pneumatiques permettant d'isoler la cabine des vibrations du châssis 16.

En outre, comme cela est représenté sur la figure 1, différents éléments de carrosserie tels que notamment une calandre 20 sont fixés sur la cabine 14.

Dans ce premier mode de réalisation, la cabine de conduite 14 correspond à une première version sans couchette, c'est-à-dire que la longueur de la cabine 14 dans la direction de déplacement (représenté par l'axe Y) du véhicule 10 est réduite par rapport à une longueur de cabine de conduite 14 correspondant à une deuxième version dans laquelle la cabine 14 est équipée d'une couchette.

Plus particulièrement, le véhicule 10 comprend des ensembles gauche 22A et droit 22B destinés à s'étendre respectivement sous des portières gauche 23A et droite 23B de la cabine 14 du véhicule 10. Ces ensembles droit 22B et gauche 22A comprennent notamment respectivement des ailes droite 24B et gauche 24A et sont destinés à être fixés sur la cabine 14.

Dans la suite de la description, on décrira en détail l'ensemble gauche 22A représenté sur la figure 2. Bien entendu, la description détaillée de l'ensemble gauche 22A s'applique également à l'ensemble droit 22B représenté sur la figure 1.

Comme cela est illustré sur la figure 2, l'aile droite 24A comprend une première face extérieure 26 destinée à être orientée vers l'extérieur lorsque l'aile 24A est dans une position définitive de montage sur le véhicule 10 (figure 1) et une deuxième face intérieure 28 orientée vers un groupe moto-propulseur (non représentés) du véhicule automobile 10 lorsque l'aile 24A est dans cette même position.

L'aile 24A comprend notamment, comme cela est représenté sur la figure 2, dans le sens allant de l'arrière à l'avant du véhicule 10 selon la direction de déplacement Y, une partie arrière 30 comprenant un bord inférieur 32 muni d'un profil arrondi formant arche d'une roue du véhicule 10 ainsi qu'une partie avant 34 formant un support d'emmarchement 35. En particulier, ce support d'emmarchement 35 est destiné à supporter au moins une marche d'accès à la cabine de conduite 14 du véhicule 10. Comme cela est représenté sur la figure 1, le véhicule 10 comprend éventuellement un autre support 36 d'emmarchement destiné à supporter une ou plusieurs marches, cet autre support 36 étant fixé au châssis 16 du véhicule 12.

L'ensemble 22A comprend également une pièce porteuse 38A, la pièce porteuse 38A étant conformée de manière à pouvoir être fixée directement à la cabine 16 tout en portant l'aile 24A et en présentant l'aile 24A en sa position définitive de montage par rapport à la cabine 14. La pièce porteuse est destinée à être d'un seul tenant avec la cabine tout au long de la vie du véhicule et à ne pouvoir prendre qu'une position donnée relativement à la cabine.

Plus précisément, dans cette position définitive de montage, l'aile 24A et la pièce porteuse 38A se superposent au moins partiellement de manière à ce que la pièce porteuse 38A constitue une doublure intérieure de l'aile 24A. Dans l'exemple décrit, l'aile 24A comprend des moyens de fixation (non représentés) à la pièce porteuse 38A permettant de rapporter l'aile 24A sur la pièce 38A par vissage ou par clipsage.

A cet effet, de préférence, la pièce porteuse 38A comprend également un bord supérieur 40 sur lesquels sont ménagés les moyens 42 de fixation de la pièce porteuse 38A à la cabine 14 et une face latérale 44 formant une face d'appui et de fixation de l'aile 24A. Dans l'exemple illustré sur la figure 2, les moyens de fixation 42 comprennent des évidements destinés à accueillir des vis, pour rapporter la pièce porteuse 38A par vissage à la cabine 14. En variante, la pièce porteuse 38A peut être rapportée à la cabine 14 par clipsage.

Le bord supérieur 40 comprend des déformations en creux et en bosse suivant un profil prédéterminé, ce profil étant destiné à épouser celui de la carrosserie inférieure de la cabine 14 à laquelle la pièce porteuse 38A est destinée à être fixée.

En outre, la pièce porteuse 38A est munie d'une surface 44 conformée pour épouser sensiblement la forme de la surface interne 28 de l'aile 24A. Par exemple, comme cela est illustré sur la figure 2, la pièce porteuse 38A comprend sur sa surface 44 un épaulement 45 destiné à fournir un appui à la partie arrière 30 de l'aile 24A.

De préférence, la pièce porteuse 38A est réalisée dans un matériau composite, par exemple du type thermodurcissable. De préférence, la pièce porteuse 38A est réalisée dans un matériau étant du type composite moulé en feuille (SMC). Grâce à la rigidité conférée par la pièce porteuse 38A réalisée en SMC, l'aile 24A peut être réalisée dans un matériau thermoplastique, par exemple en polypropylène. En variante, l'aile 24A peut être réalisée également dans un matériau thermodurcissable, tel que du SMC.

Comme cela est illustré sur la figure 2, l'ensemble 22A comprend en outre une pièce de carrosserie 46 formant une protection contre d'éventuelles projections d'eau (en anglais « anti-spray ») et destinée à s'étendre dans sa position définitive de montage sur l'aile 24A, sur la partie arrière 30 de l'aile 24A.

Par ailleurs, l'ensemble 22A comprend par exemple encore une poignée 47 formant une prise pour le conducteur lorsqu'il monte dans la cabine 14.

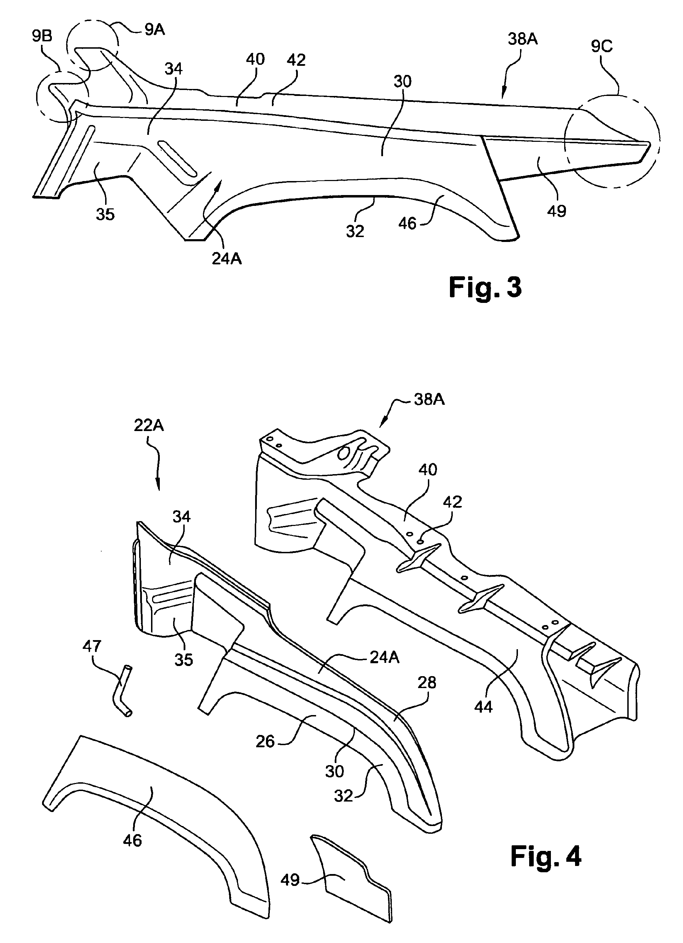

Dans un second mode de réalisation illustrée sur les figures 3 et 4, la cabine de conduite 14 correspond à une deuxième version allongée, par exemple équipée d'une couchette. Les éléments identiques à l'ensemble 22A du premier mode de réalisation sont désignés par des références identiques.

Dans ce second mode de réalisation, afin de tenir compte de la dimension longitudinale supplémentaire de la cabine 14 par rapport à la première version décrite ci-dessus selon l'axe Y, la pièce porteuse 38A comprend une partie arrière 30 plus longue et l'ensemble 22A comprend une pièce supplémentaire 49 formant cache destinée à couvrir la partie de la pièce porteuse 38A dépassant de l'aile 24A lorsque la pièce 38A et l'aile 24A sont assemblées.

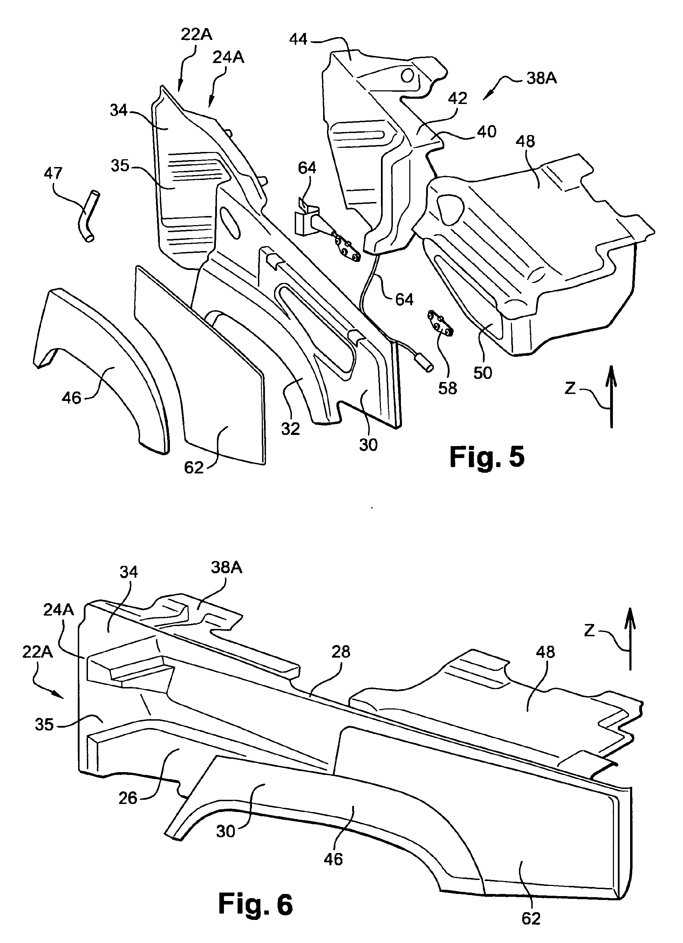

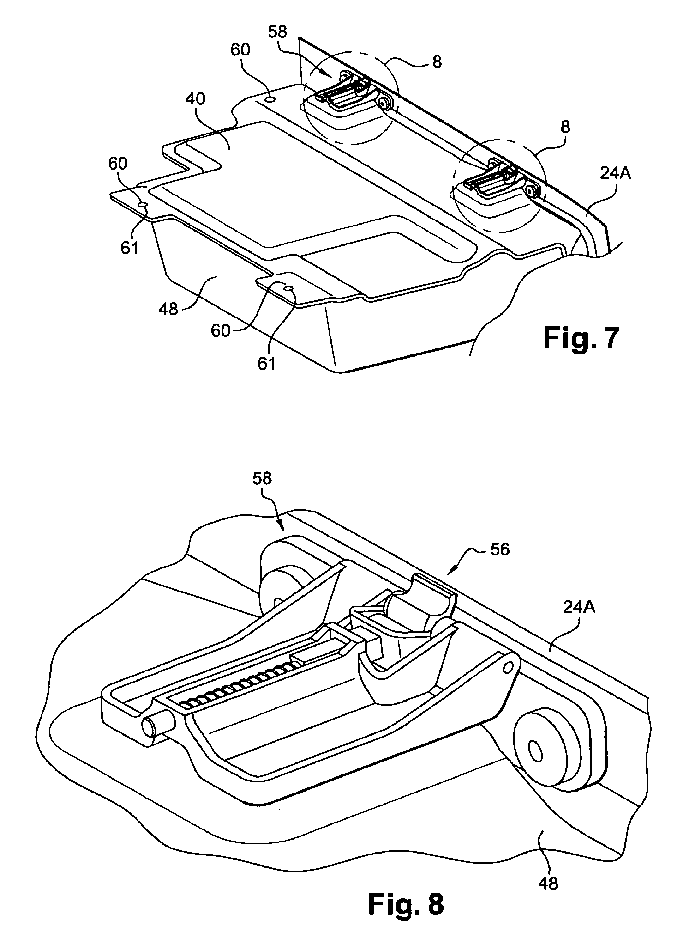

Dans un troisième mode de réalisation illustré sur les figures 5 à 8 et correspondant à une troisième version du véhicule, l'ensemble 22A comprend en outre un coffre de rangement 48, muni d'une ouverture 50 d'accès à l'intérieur du coffre 48 destinée à coïncider avec une ouverture 52 ménagée dans l'aile 24A et plus particulièrement dans la partie arrière 30 de l'aile 24A.

Dans ce troisième mode de réalisation, les éléments identiques à l'ensemble 22A du premier mode de réalisation sont désignés par des références identiques.

Le coffre 48 comprend des moyens 56 de fixation à un couvercle 62 comportant par exemple une charnière 58. Dans l'exemple illustré sur les figures 5, 8 et 9, les moyens de fixation 56 comprennent deux charnières 58. Chaque charnière 58 comprend de façon classique deux parties mobiles en rotation l'une par rapport à l'autre autour d'un axe de rotation formé par une tige (non représentée), l'une des parties étant solidaire du coffre de rangement 48, l'autre des parties étant solidaire du couvercle 62.

En outre, le coffre 48 comprend également sur sa face supérieure des moyens de fixation 60 à la cabine 14 comprenant par exemple des évidements 61 pour accueillir des vis.

Le coffre 48 est de préférence réalisé dans un matériau composite, par exemple du type thermodurcissable ceci afin d'augmenter encore la rigidité de l'ensemble 22A. De préférence, le matériau thermodurcissable est du type composite moulé en feuille (SMC). En effet, le coffre 48 a également une fonction de support de l'aile 24A, et plus précisément le coffre 48 est destiné à porter la partie arrière 30 de l'aile 24A et comprend à cet effet des moyens de fixation du coffre 48 à l'aile 24A.

L'ensemble 22A comprend un dispositif de verrouillage 64 pour permettre une fermeture sécurisée du coffre 48.

Dans ce troisième mode de réalisation, la surface 44 de la pièce porteuse 38A est conformée pour n'épouser que partiellement la forme de la surface interne de l'aile 24A. En effet, comme cela est illustré sur la figure 6, on voit que la pièce porteuse 38A ne forme une doublure que de la partie avant 34 de l'aile 24A.

Par ailleurs, dans ce troisième mode de réalisation, le support d'emmarchement 35 forme un support pour deux marches d'accès à la cabine du véhicule. Ainsi, dans ce cas, de préférence, l'aile 24A est réalisée dans un matériau composite, par exemple du type thermodurcissable.

Du fait que, dans les trois modes de réalisation, la pièce porteuse 38A est obtenue de préférence par moulage, la forme de cette pièce 38A peut être modifiée lors de sa fabrication pour permettre une adaptation à différentes versions de véhicules.

Ainsi, lors du moulage de la pièce porteuse 38A, le profil prédéterminé du bord supérieur 40, destiné à venir en contact avec la cabine 14, peut être modifié selon une direction verticale Z du véhicule 10 pour permettre une mise au point géométrique de ce profil tenant compte des jeux et affleurements entre l'aile 24A et la cabine 14.

Comme cela est représenté sur la figure 3 correspondant à la deuxième version du véhicule 10, le bord supérieur 40 comprend des déformations en creux et en bosse, le profil de ce bord 40 étant défini en fonction de celui de la carrosserie inférieure de la cabine 14 à laquelle la pièce porteuse 38A est destinée à être fixée.

En particulier, afin d'adapter le profil du bord 40 de la pièce porteuse 38A aux différentes versions de la cabine 14, le moule (non représenté) de fabrication de la pièce porteuse 38A comprend des pavés en poinçon 66 et en matrice 68 destinés à être positionnés dans le moule selon des orientations prédéfinies.

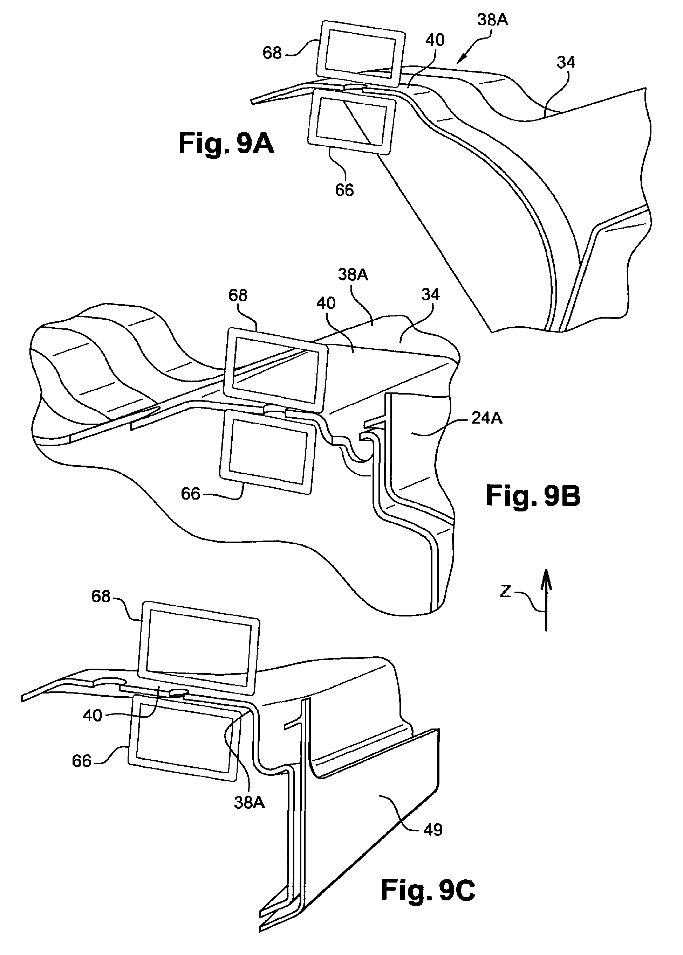

Ainsi, sur les figures 9A à 9C, on a représenté schématiquement, la position de différents pavés en poinçon 66 et en matrice 68 pour la définition du profil prédéterminé du bord supérieur 40 de la pièce porteuse 38A selon le deuxième mode de réalisation de l'invention. En modifiant la position de ces pavés 66 et 68 dans le moule, il est possible d'optimiser le profil prédéterminé du bord supérieur 40 de la pièce porteuse 38A afin que les jeux et les affleurements entre la cabine 14 et l'aile 24A soient optimisés.

On va maintenant décrire les principaux aspects du fonctionnement d'un ensemble 22A comprenant une aile 24A et une pièce porteuse 38A selon les différents modes de réalisation de l'invention.

Dans un premier temps, on fabrique la pièce porteuse 38A par moulage de cette dernière dans un matériau étant par exemple du SMC, c'est-à-dire un mélange à mouler en feuille constituée de fibres de verre, d'une résine de polyester et de charges minérales.

En fonction de la géométrie de la zone d'accostage de l'aile 24A sur la cabine 14 du véhicule automobile 10, grâce aux pavés en poinçon 66 et en matrice 68, on peut ajuster le profil extérieur du bord supérieur 40 de la pièce porteuse 38A.

Une fois la pièce porteuse 38A moulée, on assemble l'aile 24A et la pièce 38A par exemple au moyen de vis de fixation ou éventuellement par clipsage. L'aile 24A et la pièce 38A sont alors solidaires l'une de l'autre et l'ensemble 22A est de ce fait facile à manipuler et à transporter. Avantageusement, l'ensemble 22A peut être rapporté à la cabine 14 en une seule étape d'assemblage. Il est prévu que cet ensemble soit rapporté de façon à être fixe relativement à la cabine.

La pièce porteuse 38A telle que décrite ci-dessus peut donc être adaptée pour équiper toutes les versions existantes de véhicule automobile comprenant un châssis et une cabine posée sur le châssis. Elle peut simplifier le montage de l'aile sur la cabine en proposant une livraison de l'aile en module et permet donc d'économiser de nombreux coûts de fabrication.

## Revendications

1. Ensemble (22A, 22B) d'une aile (24A, 24B) et d'une pièce porteuse (38A, 38B) de l'aile (24A; 24B) pour un véhicule automobile (10), ce véhicule (10) comprenant un châssis (16) et une cabine (14) de conduite distincte du châssis (16) et portée par ledit châssis (16), ensemble (22A, 22B) dans lequel la pièce porteuse (38A, 38B) est conformée de manière à pouvoir être fixée directement à la cabine (14) tout en portant l'aile (24A, 24B) et en présentant l'aile (24A, 24B) dans sa position définitive de montage par rapport à la cabine (14), position dans laquelle l'aile (24A, 24B) et la pièce porteuse (38A, 38B) se superposent au moins partiellement de manière à ce que la pièce porteuse (38A, 38B) constitue une doublure intérieure de l'aile (24A, 24B), c'est-à-dire que là pièce porteuse supporte l'aile sur une surface relativement grande, ensemble **caractérisé en ce que** l'aile (24A, 24B) comprend un support (35) pour au moins une marche d'accès à la cabine (14), situé de préférence en partie avant (34) de l'aile, dans le sens allant de l'arrière vers l'avant du véhicule et en considérant l'aile (24A, 24B) dans sa position de montage définitive.

2. Ensemble (22A, 22B) selon la revendication 1, dans lequel la pièce porteuse (38A, 38B) est réalisée dans un matériau composite, par exemple du type thermodurcissable.

3. Ensemble (22A, 22B) selon la revendication 1 ou 2, dans lequel l'aile (24A, 24B) est réalisée dans un matériau thermoplastique, par exemple en polypropylène.

4. Ensemble (22A, 22B) selon l'une quelconque des revendications précédentes, dans lequel l'aile (24A, 24B) comprend un bord inférieur (32) formant arche d'une roue de véhicule automobile, situé de préférence en partie arrière (30) de l'aile, dans le sens allant de l'arrière vers l'avant du véhicule et en considérant l'aile (24A, 24B) dans sa position de montage définitive.

5. Ensemble (22A, 22B) selon l'une quelconque des revendications précédentes, dans lequel la pièce porteuse est munie d'une surface conformée pour épouser sensiblement au moins partiellement la forme d'une surface interne de l'aile.

6. Ensemble (22A, 22B) selon l'une quelconque des revendications précédentes, dans lequel la pièce porteuse (38A, 38B) comprend un bord supérieur (40) sur lequel sont ménagés les moyens (42) de fixation de la pièce porteuse à la cabine (14) et une face latérale formant une face d'appui et de fixation de l'aile (24A, 24B).

7. Ensemble (22A, 22B) selon l'une quelconque des revendications précédentes, comprenant en outre un coffre (48) de rangement muni d'une ouverture (50) d'accès à l'intérieur du coffre (48) destinée à coïncider avec une ouverture ménagée dans l'aile, le coffre comprenant des moyens de fixation à l'aile et à la cabine et portant l'aile.

8. Ensemble (22A, 22B) selon la revendication précédente, dans lequel le coffré (48) est réalisé dans un matériau composite, du type par exemple thermodurcissable.

9. Ensemble (22A, 22B) selon l'une quelconque des revendications précédentes, dans lequel la pièce porteuse (38A, 38B) est fixée à la cabine de façon à être fixe relativement à celle-ci (14), c'est-à-dire que la pièce porteuse ne présente aucun degré de liberté relativement à la cabine et est prévue pour rester, une fois montée sur la cabine, dans une même position relativement à celle-ci.

10. Avant (12) de véhicule automobile (10) comprenant une cabine (14) de conduite; **caractérisé en ce qu'**il comprend un ensemble (22A, 22B) selon l'une quelconque des revendications précédentes, la pièce porteuse (38A, 38B) de l'ensemble (22A, 22B) étant fixée directement à la cabine (14).

11. Véhicule automobile (10), **caractérisé en ce qu'**il comprend un avant (12) selon la revendication précédente.

## Claims

1. Assembly (22A, 22B) of a wing (24A, 24B) and a supporting element (38A, 38B) of the wing (24A, 24B) for an automobile (10), this automobile (10) comprising a chassis (16) and a driving cab (14) separate from the chassis (16) and supported by said chassis (16), assembly (22A, 22B) wherein the supporting element (38A, 38B) is shaped such that it can be attached directly to the cab (14) while supporting the wing (24A, 24B) and presenting the wing (24A, 24B) in its final assembly position with respect to the cab (14), position in which the wing (24A, 24B) and the supporting element (38A, 38B) are at least partially superimposed such that the supporting element (38A, 38B) forms an inner lining of the wing (24A, 24B), i.e. the supporting element supports the wing over a relatively large area, assembly **characterised in that** the wing (24A, 24B) comprises a support (35) for at least one step to access the cab (14), said support (35) preferably located in the front section (34) of the wing, in the direction going from the rear to the front of the automobile and considering the wing (24A, 24B) in its final assembly position.

2. Assembly (22A, 22B) according to claim 1, wherein the supporting element (38A, 38B) is made from a composite material, such as a thermosetting material.

3. Assembly (22A, 22B) according to claim 1 or 2, wherein the wing (24A, 24B) is made from a thermoplastic material, such as polypropylene.

4. Assembly (22A, 22B) according to any of the preceding claims, wherein the wing (24A, 24B) comprises a lower edge (32) forming an automobile wheel arch, said lower edge (32) preferably being located in the rear section (30) of the wing, in the direction going from the rear to the front of the automobile and considering the wing (24A, 24B) in its final assembly position.

5. Assembly (22A, 22B) according to any of the preceding claims, wherein the supporting element is equipped with a surface shaped to fit substantially at least partially the shape of an inner surface of the wing.

6. Assembly (22A, 22B) according to any of the preceding claims, wherein the supporting element (38A, 38B) comprises an upper edge (40) equipped with the means (42) for attaching the supporting element to the cab (14) and a lateral side forming a side for supporting and attaching the wing (24A, 24B).

7. Assembly (22A, 22B) according to any of the preceding claims, also comprising a storage box (48) fitted with an opening (50) to access the inside of the box (48) designed to coincide with an opening formed in the wing, the box comprising means for attachment to the wing and to the cab and supporting the wing.

8. Assembly (22A, 22B) according to the preceding claim, wherein the box (48) is made from a composite material, such as a thermosetting material.

9. Assembly (22A, 22B) according to any of the preceding claims, wherein the supporting element (38A, 38B) is attached to the cab so that it is fixed relative to the cab (14), i.e. the supporting element has no degrees of freedom relative to the cab and is designed to remain, once assembled on the cab, in the same position relative to it.

10. Front (12) of an automobile (10) comprising a driving cab (14), **characterised in that** it comprises an assembly (22A, 22B) according to any of the preceding claims, the supporting element (38A, 38B) of the assembly (22A, 22B) being attached directly to the cab (14).

11. Automobile (10), **characterised in that** it comprises a front (12) according to the preceding claim.

## Patentansprüche

1. Anordnung aus (22A, 22B) einem Flügel (24A, 24B) und einem Tragteil (38A, 38B) des Flügels (24A, 24B) für ein Kraftfahrzeug (10), wobei dieses Fahrzeug (10) ein Chassis (16) und einen Führerstand (14) aufweist, der von dem Chassis (16) getrennt ist und der von dem Chassis (16) getragen wird, wobei bei der Anordnung (22A, 22B)das Tragteil (38A, 38B) so ausgebildet ist, dass es direkt an dem Führerstand (14) befestigt werden kann und gleichzeitig den Flügel (24A, 24B) trägt und den Flügel (24A, 24B) in seiner endgültigen Montageposition in Bezug zu dem Führerstand (14) präsentiert, wobei in der Positionsich der Flügel (24A, 24B) und das Tragteil (38A, 38B) einander wenigstens teilweise derart überlagern, dass das Tragteil (38A, 38B) eine innere Verkleidung des Flügels (24A, 24B) bildet, das heißt, dass das Tragteil den Flügel auf einer relativ großen Oberfläche trägt, wobei die Anordnung **dadurch gekennzeichnet ist, dass** der Flügel (24A, 24B) einen Träger (35) für wenigstens eine Einsteigstufe zu dem Führerstand (14) aufweist, der sich vorzugsweise im vorderen Teil (34) des Flügels in die Richtung, die von der Rückseite zur Vorderseite des Fahrzeugs verläuft und unter Betrachten des Flügels (24A, 24B) in seiner endgültigen Montageposition befindet.

2. Anordnung (22A, 22B) nach Anspruch 1, bei der das Tragteil (38A, 38B) aus einem Verbundwerkstoff hergestellt ist, zum Beispiel des wärmehärtbaren Typs.

3. Anordnung (22A, 22B) nach Anspruch 1 oder 2, bei der der Flügel (24A, 24B) aus einem Thermoplastwerkstoff, zum Beispiel aus Polypropylen hergestellt ist.

4. Anordnung (22A, 22B) nach einem der vorhergehenden Ansprüche, bei der der Flügel (24A, 24B) einen unteren Rand (32) aufweist, der einen Bogen eines Kraftfahrzeugrads bildet, der sich vorzugsweise im hinteren Teil (30) des Flügels in die Richtung befindet, die von der Rückseite zu der Vorderseite des Fahrzeugs verläuft und unter Betrachten des Flügels (24A, 24B) in seiner endgültigen Montageposition.

5. Anordnung (22A, 22B) nach einem der vorhergehenden Ansprüche, bei der das Tragteil mit einer Oberfläche versehen ist, die ausgebildet ist, um sich im Wesentlichen wenigstens teilweise an die Form einer internen Oberfläche des Flügels zu schmiegen.

6. Anordnung (22A, 22B) nach einem der vorhergehenden Ansprüche, bei der das Tragteil (38A, 38B) einen oberen Rand (40) aufweist, auf dem die Mittel (42) zum Befestigen des Tragteils des Führerstands (14) eingerichtet sind, und eine seitliche Fläche, die eine Auflage- und Befestigungsfläche des Flügels (24A, 24B) bildet.

7. Anordnung (22A, 22B) nach einem der vorhergehenden Ansprüche, die ferner einen Aufbewahrungskoffer (48) aufweist, der mit einer Zugangsöffnung (50) zum Inneren des Koffers (48) versehen ist, die dazu bestimmt ist, mit einer Öffnung übereinzustimmen, die in dem Flügel eingerichtet ist, wobei der Koffer Mittel zum Befestigen an dem Flügel und an dem Führerstand aufweist und den Flügel trägt.

8. Anordnung (22A, 22B) nach dem vorhergehenden Anspruch, bei der der Koffer (48) aus einem Verbundwerkstoff hergestellt ist, zum Beispiel des wärmehärtbaren Typs.

9. Anordnung (22A, 22B) nach einem der vorhergehenden Ansprüche, wobei das Tragteil (38A, 38B) so an dem Führerstand befestigt ist, dass es in Bezug zu diesem (14) stationär ist, das heißt, dass das Tragteil in Bezug zu dem Führerstand keinen Freiheitsgrad aufweist und vorgesehen ist, nachdem er auf den Führerstand montiert wurde, in derselben Position zu diesem zu bleiben.

10. Vorderseite (12) eines Kraftfahrzeugs (10), die einen Führerstand (14) aufweist, **dadurch gekennzeichnet, dass** sie eine Anordnung (22A, 22B) nach einem der vorhergehenden Ansprüche aufweist, wobei das Tragteil (38A, 38B) der Anordnung (22A, 22B) direkt an dem Führerstand (14) befestigt ist.

11. Kraftfahrzeug (10) **dadurch gekennzeichnet, dass** es eine Vorderseite (12) nach dem vorhergehenden Anspruch aufweist.
